# EUROPEAN PATENT SPECIFICATION

(11) **EP 4 296 503 B1**
(45) Date of publication and mention of the grant of the patent: **07.01.2026**
(21) Application number: 22180984.1
(22) Date of filing: 24.06.2022
(51) Int. Cl.: F03B 13/14, F03B 13/18

(54) **A WAVE ENERGY POWER GENERATION SYSTEM**
SYSTEM ZUR STROMERZEUGUNG AUS WELLENENERGIE
SYSTÈME DE PRODUCTION D'ÉNERGIE HOULOMOTRICE

(43) Date of publication of application: 27.12.2023
(73) Proprietor: Waves 2 Power ApS c/o Christian Nereus Grant, 7730 Hanstholm (DK)
(72) Inventor: Grant, Christian Nereus, 7730 Hanstholm (DK)
(74) Representative: Dragsted Partners A/S

(56) References cited:
- WO-A1-2014/041232
- DE-A1- 102009 008 211
- US-A- 4 914 915
- US-B1- 6 216 455

## Description

### Technical field

A wave energy power generation system configured to convert wave energy from a body of water into electricity, the wave energy power generation system comprising a tubular part extending axially from a first end to an open second end, where the second end of the tubular part is configured to be submerged into the body of water.

### Description

Wave energy converters are used to capture energy of waves for, e.g., electricity generation, where the energy of the waves may be utilised in some form to transform a mechanical energy into electrical energy. Such a conversion may be seen as very attractive as waves in the ocean are easily accessible. However, there have been numerous attempts to provide wave energy conversion systems, where systems that use wave power have not been as successful as other renewable energy sources such as wind power, hydropower and solar power. There are numerous reasons for this, where one is the destructive force of waves and water as it is often difficult to build mechanical elements that are capable of withstanding the forces of waves and the sea.

Another issue is that it has been difficult to find effective solutions where the high-power density of waves has been successfully transformed into electrical energy as it has been difficult to find successful solutions that can transform a high percentage of the power density of waves into electricity.

One way of attempting to convert the energy of waves into electricity has been presented in US 6,216,455, where a solution has been presented on an apparatus for the conversion of energy from the vertical movement of seawater comprising a hollow body being applied substantially upright on the sea bottom provided with at least one aperture in the wall thereof in such a way that water is free to move into and out of the hollow body, where a propeller is adapted to rotate in response to a fluid passing past the propeller. However, a drawback of such a system may be seen in that the propeller needs to be enclosed in a very confined space in order to ensure that the flow of fluid drives the propeller.

WO 2014/041232 discloses a system for generating wave power comprising at least one collector including a lower opening providing access to a resonant chamber (2) and a turbine with pivoting blades, said turbine being disposed concentrically in the opening of the collector and connected to a generator.

Thus, it is an object of the present invention to attempt to overcome the drawbacks of the prior art.

In accordance with the invention, a wave energy power generation system configured to convert wave energy from a body of water into electricity is provided, the wave energy power generation system comprising a tubular part extending axially from a first end to an open second end, where the second end of the tubular part is configured to be submerged into the body of water, and where the tubular part is secured in a fixed position relative to the wave movement of the body of water, and where wave movements in the body of water result in an axial flow of water inside the tubular part in a first direction towards the first end when the surface level of the body of water increases around the tubular part and in a second direction towards the second end when the surface level of the body of water decreases around the tubular part; a power generation device; a rotor positioned at a first axial position inside the tubular part, where the rotor is rotationally connected along a rotational axis to the power generation device, where the rotor is configured to transform the axial movement of water inside the tubular part into rotational movement of the rotor, and where the first axial position is below the minimum level of water inside the tubular part.

The tubular part may be seen as having a second end that is open, allowing movement of water in the surrounding body of water to be transmitted into the volume of the tubular part. Thus, when a wave in the surrounding body of water travels towards the tubular part and causes an increase or a decrease in the vertical position of the surface level of the body of water, a correlated increase or decrease in the level of water inside the tubular part will follow subsequently. As the tubular part can be seen as an at least partly independent body of water, the increase or decrease in the level of water is not instantaneous, and there may be a delay inside the tubular part when the surrounding level of water increases and vice versa.

The increase and decrease in water level inside the tubular part causes an axial movement of the water inside the tubular part, i.e. where the water moves in an axial first direction towards the first end when the wave crest surrounds the tubular part, and where the water moves in an axial second direction towards the second end when the wave trough surrounds the tubular part. This movement of water inside the tubular part may be seen as having a high-power density, where it may be possible to harvest some of the mechanical power of the wave and transform this mechanical power into electrical power. This may be achieved by providing a rotor inside the tubular part, where the shifting flow of water may be utilised to provide rotational movement to the rotor, where the rotational movement of the rotor may be transmitted towards a power generator device, such as an electric generator, where the mechanical movement of the rotor may be transformed into electric power.

As the waves in the body of water are continuous, and the surrounding body of water constantly shifts from a wave crest to a wave trough when waves are present, the movement of water inside the tubular element is continuous in alternating directions. Thus, by ensuring that the rotor is in a first axial position below the minimum level of water inside the tubular part, it is ensured that the water current in the first direction and the second direction inside the tubular part continuously interacts with the rotor and allows the rotor to provide rotational movement both in the first direction and the second direction.

According to the invention, the rotor is configured to be manoeuvred in the first direction when the axial flow of water inside the tubular part is flowing in the second direction, and the rotor is configured to be manoeuvred in the second direction when the axial flow of water inside the tubular part is flowing in the first direction. This means that the rotor may be moved in a direction that is opposite to the direction of the flow of water inside the tubular part, where the axial movement of the rotor in the opposite direction will change the speed of the flow of water relative to the rotor so that the water flows past the rotor at a higher speed than if the rotor is in a fixed position axially. The increase in speed ensures that there is an increase in mechanical force that affects the rotor as the speed of the flow of water past the rotor is higher than if the rotor was axially stationary. This means that more mechanical power may be transmitted towards the power generation device, and this should therefore increase the production of electricity in the wave energy power generation system as compared to a system having a stationary rotor.

The axial movement of the rotor may be obtained in any suitable way, where it has been discovered by the inventors that the most effective way of obtaining the axial movement of the rotor inside the tubular member in a first or a second direction may be to utilise the motion of the surrounding body of water, or the motion of the body of water inside the tubular member to provide axial movement of the rotor inside the tubular part. Thus, by harvesting energy from the motion of the body of water and transmitting the mechanical energy of the motion of the body of water into a first mechanical force capable of providing axial movement of the rotor in a direction that is opposite to the direction of the flow, it is possible to harvest at least a part of the first mechanical force in the form of rotational force on the rotor.

In one exemplary embodiment of the present disclosure, the rotor may be capable of transforming a bi-directional axial flow into a rotational movement in one direction. Thus, the rotor may be of the kind where an axial flow in a first direction past the rotor causes rotation in a first rotational direction, and where an axial flow in a second direction past the rotor causes a rotation in the same direction as the axial flow in the opposite direction, i.e. causes a rotation in a first rotational direction. Thus, by providing a bi-directional rotor, the rotational force of the rotor may be maintained in one direction, thereby ensuring that the reverse axial flow of water inside the tubular part does not cause a loss in power where the rotor must come to a stop and rotate in the opposite direction. Such a bi-directional rotor may be obtained using one or more rotor blades that extend in a radial direction outwards, where the rotor has a leading edge and a trailing edge in a rotational direction, and where the rotor may be symmetrical across a blade plane parallel to a radial axis so that an axial flow in a direction that is normal to the blade plane provides a force that pushes the blade in a direction of rotation.

In one exemplary embodiment, the rotor may comprise a blade that may rotate along the radial axis, thereby increasing the effect of the flow by changing the pitch of the blade to increase the rotational force of the blade received by the axial flow of water. Thus, by changing the pitch of the blade when the water flows in a first axial direction and pitching the blade into its opposite direction when the water flows in a second axial direction, it may be possible to increase the rotational force (torque) of the rotor, thereby increasing the energy production of the electric generator.

In one exemplary embodiment of the present disclosure, the rotor comprises one or more impellers, turbine blades, propellers, or any suitable element capable of transforming an axial flow past the rotor into rotational force, where the torque of the rotor may be used to generate electricity.

In one exemplary embodiment of the present disclosure, the wave energy power generation system comprises a driveshaft where a first part may be rotationally connected with the power generation device, and where an opposing part may be rotationally connected with the rotor. The driveshaft may extend from the power generation device and may have a length extending in a radial direction and extending to the rotor, which may be positioned at a length from the power generation device. The driveshaft may extend into the body of water inside the tubular part and may be utilised to transfer the rotational force of the rotor to the power generation device so that a predetermined rotation of the rotor is transmitted into a rotation of the power generation device, thereby allowing the torque of the rotor and the driveshaft to be transformed from a mechanical force to electrical power via the power generation device.

In one exemplary embodiment of the present disclosure, the rotor comprises a rotor body having a first cross-sectional diameter in a radial direction, providing a constriction inside the tubular body in the axial area where the rotor may be positioned. The rotor body may have a cross-sectional diameter that is a predefined percentage of the cross-sectional diameter of the tubular member. This means that when the water inside the tubular part flows past the rotor body, the area where the water can pass is reduced relative to the full diameter of the tubular part, where the thrust of the water causes the water to speed up past the rotor body. Thus, by providing a rotor body, it may be possible to provide a constriction in the area between the rotor body and the inner surface of the tubular part. The constriction ensures that the velocity of the water past the rotor body increases and may thereby also increase the mechanical force that is applied to the rotor, thereby increasing the rotational force of the rotor. The flow of fluid past the constriction may increase the fluid pressure in the part of the tubular part which comprises the constriction, where the increase in pressure may be seen as a result of the increase in velocity of the fluid past the constriction. This increase in pressure may increase the effect of the fluid on the rotor, thereby increasing the rotational energy compared to a non-constricted area of the tubular part.

In one exemplary embodiment, the rotor body may comprise a conically shaped part, where the conically shaped part may taper from the rotor body and towards the central axis of the tubular part and/or driveshaft. Thus, the diameter of the rotor body may decrease in a direction away from a central part of the rotor body from a first body diameter to a second body diameter, where the second body diameter is smaller than the first body diameter. Thus, the area of maximum constriction inside the tubular part (part where the rotor body has its largest diameter) may increase or decrease incrementally in an axial direction towards and away from the rotor body, and the constriction will be increased and decreased gradually. The tapering may have a conical shape, where the wide part of the cone faces the rotor body, and the narrow part may face away from the rotor body.

In one exemplary embodiment of the present disclosure, the tubular part has a first cross-sectional diameter in the radial direction in a first area, where the tubular part has a second cross-sectional diameter in the radial direction in a second area, where the second cross-sectional diameter may be smaller than the first cross-sectional diameter, and where the rotor may be positioned in the second area. Thus, the region of the tubular part having the rotor may be constricted in the region of the rotor. The constriction ensures that the velocity of the water past the rotor body increases and may thereby also increase the mechanical force that is applied to the rotor, thereby increasing the rotational force of the rotor. The flow of fluid past the constriction may increase the fluid pressure in the part of the tubular part which comprises the constriction, where the increase in pressure may be seen as a result of the increase in velocity of the fluid past the constriction. This increase in pressure may increase the effect of the fluid on the rotor, thereby increasing the rotational energy compared to a non-constricted area of the tubular part.

In one exemplary embodiment of the present disclosure, the wave energy power generation system further comprises a buoyancy body configured to be positioned at the surface level of the body of water inside and/or outside the tubular part, where the axial movement of the buoyancy body may be transferred to the rotor to manoeuvre the rotor in a first direction or a second direction. The buoyancy body may be arranged so that the buoyancy body follows the movement of the surface level of the water so that when a wave crest approaches the tubular part, the buoyancy body rises, while when a wave trough approaches the tubular part, the buoyancy body falls. The rise and fall of the buoyancy body together with the movement of the wave may be harnessed and may be transformed into mechanical energy that may be transferred to the rotor to provide axial movement of the rotor in the first and/or the second direction. As the rise and fall of the surface of the water during wave movement is inevitable, the motion will be present either inside the tubular part or outside the tubular part, and the magnitude of the rise and fall will not be affected by the mechanical forces that affect the rotor. Thus, any mechanical force harvested from the buoyancy body may be transferred directly or indirectly to the rotor as axial movement of the rotor in the first direction or the second direction, where the mechanical force may increase the relative speed of the water past the rotor, thereby increasing the uptake of the mechanical energy by the rotor using the velocity of the fluid passing the rotor. Thus, by utilising a buoyancy body to move the rotor in an axial direction, the wave energy power generation device may have a second source of mechanical energy in the form of the movement of the buoyancy body, where the first source of mechanical energy is the flow of the water past the rotor.

This means that the wave energy power generation system may have a first energy absorption part and a second energy absorption part, where both energy absorption parts deliver mechanical energy to the same part, i.e. the rotor of the system.

In one exemplary embodiment of the present disclosure, a movement of the buoyancy body in a first direction results in the movement of the rotor in an opposite second direction, or a movement of the buoyancy body in a second direction results in the movement of the rotor in an opposite first direction. It can be assumed that the rise and fall of the surface level of the body of water inside the tubular part and/or outside the tubular part may result in the axial flow of water inside the tubular part, where a rise causes an axial flow in the first axial direction, and a fall causes an axial flow in the second axial direction, i.e. the direction of flow follows the direction of the surface level of water, at least inside the tubular part. Thus, in order to ensure that the rotor is manoeuvred in a direction opposite to the axial flow of water, it may be advantageous to invert the axial movement of the buoyancy body into an axial movement of the rotor. This means that when the buoyancy body rises, the rotor may be manoeuvred in an opposite direction and vice versa. This means that the rotor will be pushed in a direction opposite to the flow direction of the water inside the tubular part, and as the flow of water travels at a first speed, and the rotor travels at a second speed in the opposite direction, the resulting relative speed of the water passing the rotor is the combined first and second speed.

In one exemplary embodiment of the present disclosure, the buoyancy body may be connected with the rotor via a first gear, where an axial movement of the buoyancy body may be transferred as an axial movement of the rotor via the first gear. The buoyancy body may be maintained in a fixed position in a first and a second dimension (the plane of the radial axis), while it may be moveable in a third dimension (vertical axis) upwards and downwards to follow the movement of the surface of the body of water. The movement in the vertical direction (parallel to the axial direction) may be transmitted via a gear mechanism, where the gear mechanism may, e.g., be in the form of a gear, and the movement may be transmitted via a rod having a mechanism interacting with the gear so that any axial movement of the rod creates a rational movement of the gear. The rotational movement of the gear may subsequently be utilised to provide axial movement of the rotor in a first direction and/or a second direction. Thus, when the buoyancy body changes its axial direction together with the surface of the water, the rod may rotate the gear in its opposite direction, where the rotational movement of the gear in the opposite direction may be utilised to manoeuvre the rotor in its opposite axial direction.

In one exemplary embodiment of the present disclosure, the tubular part may be configured to be positioned in a vertical position relative to the body of water. By providing the tubular part in a vertical position, the vertical movement of the body of water may during wave movement be confined within the tubular body, and the forces that push the water into the tubular body are optimised as the vertical movement of the body of water surrounding the tubular body is aligned inside the tubular body.

In one exemplary embodiment of the present disclosure, the power generation device may be an electric generator that converts the rotational movement of the rotor into electrical energy. The electric generator may be a device that converts motive power (mechanical energy) into electrical power for use in an external circuit.

In one exemplary embodiment of the present disclosure, the rotor may be configured to be manoeuvred from its first axial position inside the tubular part to a second axial position inside the tubular part, where the second axial position may be below the minimum level of water inside the tubular part. This means that the rotor may be positioned below the surface of the water at all times as the rotor is intended to convert the force of the flow of water in an axial direction past the rotor into rotational force. Thus, during use, the rotor may be configured to be submerged at all times and should under normal circumstances not rise above the surface level of the water inside the tubular part.

In one exemplary embodiment of the present disclosure, the rotor may be submerged in a body of water inside the tubular part in its first axial position, second axial position and/or any axial position during use. This means that the rotor may be positioned below the surface of the water at all times as the rotor is intended to convert the force of the flow of water in an axial direction past the rotor into rotational force. Thus, during use, the rotor may be configured to be submerged at all times and should under normal circumstances not rise above the surface level of the water inside the tubular part.

### Brief description of the drawings

The following is an explanation of exemplary embodiments with reference to the drawings, in which:
Fig. 1 is a perspective view of a wave energy power generation system in accordance with the present invention,
Fig. 2A is a side view of the same, having the rotor in a first position,
Fig. 2B is a side view of the same, having the rotor in a second position,
Fig. 3 shows an exemplary rotor inside a tubular part,
Fig. 4A shows a perspective view of a second energy generation part,
Fig. 5A shows a perspective view of a gearing part, and
Fig. 5B shows a side view of a gearing part.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

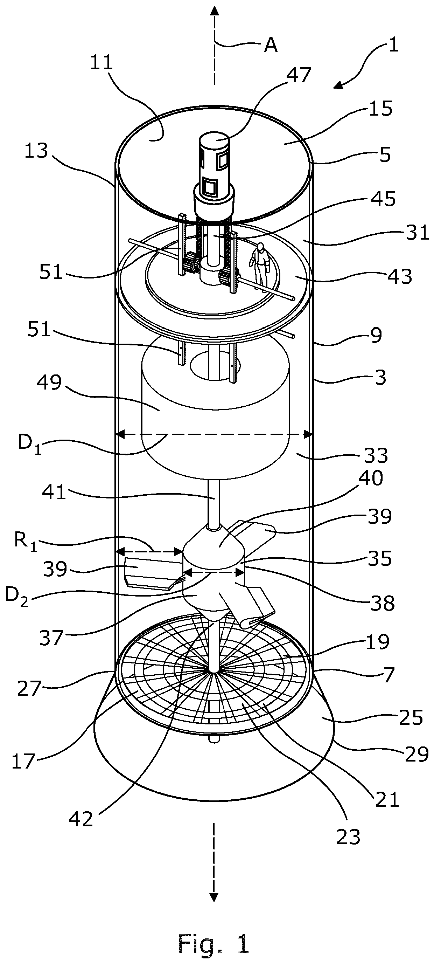

Fig. 1 shows a wave energy power generation system 1 in accordance with the present invention, where the system 1 comprises a tubular part 3 having a first end 5 and a second end 7, where the tubular part extends axially along a longitudinal axis A from the first end 5 to the second end 7. The tubular part 3 is shown in this example as being transparent. The tubular part 3 is configured to be positioned in a vertical position in a body of water, where the longitudinal axis A is positioned approximately in a vertical position, where the longitudinal axis A is parallel to the gravitational force of the earth.

The tubular part 3 comprises a side wall 9 having an inner surface 11 and an outer surface 13, where the inner surface 11 defines an inner volume 15 of the tubular part 3. The second end 7 of the tubular part 3 has an opening 17 providing fluid communication between the outside of the tubular part 3 and the inner volume 15. The opening 17 may be provided with a grid-formed structure 19 having structural elements 21 and openings 23 allowing the flow of fluids between the outside and the inner volume, while preventing structures having a size larger than the size of the openings 23 from entering the volume. This may, e.g., be utilised to prevent animals from entering the inner volume 15 via the opening 17. The shape and the size of the structural elements 21 and the grid openings 23 may be formed to optimise the flow of water, while ensuring the safety of sea animals.

The second end 5 may further comprise a conical wall 25, where a first end 27 of the wall has a diameter similar to that of the second end 5, while the second end 29 of the wall has a diameter that is larger than the diameter of the first end 27. This may be utilised to assist in alignment of the flow of fluid into the tubular part 3 and to prevent cavitation at the opening 17 in the second end 7 of the tubular part 3.

The tubular part 3 may have a dry part 31 and a wet part 33, where the dry part 31 is intended to be positioned above the maximum surface level of water inside the tubular part, and the wet part 33 is intended to be submerged, at least partly, below the maximum and/or minimum surface level of water inside the tubular part 3. The wet part 33 may comprise a rotor 35 having a rotor body 37 and a plurality of rotor blades 39. The rotor 35 may be connected to a driveshaft 41, where the rotor 35 and the driveshaft 41 may rotate along a rotational axis, i.e., in this example coaxially with the longitudinal axis A. The rotor 35 may be configured to rotate in one direction, where a body of water inside the tubular member 3 in a direction towards the first end 5 and/or the second end 7 thrusts the rotor in the one rotational direction. The driveshaft 41 may be centralised inside the inner volume 15, using the structural elements 21 at the second end 5 and using a platform 43 at the opposite end of the driveshaft 41. The first end 45 of the driveshaft 41 may be connected to a power generation device 47, where the rotational force provided by the rotor 35 and the driveshaft 41 is transmitted into the power generation device 47 to transform the mechanical energy into electrical energy. The power generation device may be positioned in the dry part 33 of the tubular part 3.

The system 1 may further comprise a buoyancy body 49, where the buoyancy body may be positioned in the wet part 33 of the tubular part 3, and where the buoyancy body 49 is configured to float at the surface level of the water inside the tubular part 3. The buoyancy body 49 may be provided with a connecting part 51 that extends from the wet part 33 and into the dry part 31, where the connecting part 51 and the buoyancy body may be configured to move in an axial direction towards the first end 5 and the second end 7 when the surface level of the water inside the inner volume 17 rises and falls, respectively. The connecting part may be in mechanical connection with the driveshaft 41, where an axial movement in a first axial direction towards the first end 5 provides an axial movement to the driveshaft 41 in a second axial direction towards the second end 7, where the first direction is opposite to the second direction. Thus, the axial movement of the driveshaft 41 may provide an axial movement to the rotor 35 so that the rotor may move in a first axial direction towards the first end 5 and an opposing axial movement to the rotor 35 in a second axial direction towards the second end 7. Thus, the axial movement of the rotor 35 and the driveshaft 41 may be opposed to the axial movement of the buoyancy body 49.

Generally, the buoyancy body may be in the form of a buoyancy body having a ballast tank. Thus, the buoyancy body may be weighed in such a manner that the updrift of the buoyancy body is sufficient to follow the flow of the water inside the tubular part in a first direction, and that the weight of the body is sufficient to follow the flow of water inside the tubular part in a second direction, while still being capable of providing axial movement to the rotor and/or the driveshaft in an opposite direction to the flow of water inside the tubular part.

In the embodiment shown in Fig. 1, the tubular part 3 has an inner diameter D1, where the inner diameter defines the diameter of the flow of the body of water inside the tubular part 3. Furthermore, the rotor 35 comprises a rotor body 37, where the rotor body has an outer diameter D2, where the outer diameter D2 of the rotor body 37 is smaller than the inner diameter D1. The outer diameter of the rotor body 37 causes a constriction R1 inside the tubular part 3 between the outer surface 38 of the rotor body 37 and the inner surface 11 of the tubular part 3. This constriction R1 causes an increase in the velocity of the flow of water past the rotor body 37, thereby increasing the force that is thrusted on the rotor blades 39. The rotor body may comprise a first conical part 40 and a second conical part 42 that ensure that the transition from the diameter of the driveshaft 41 to the diameter D2 of the rotor body 37 on both sides of the rotor body 37 is incremental in an axial direction.

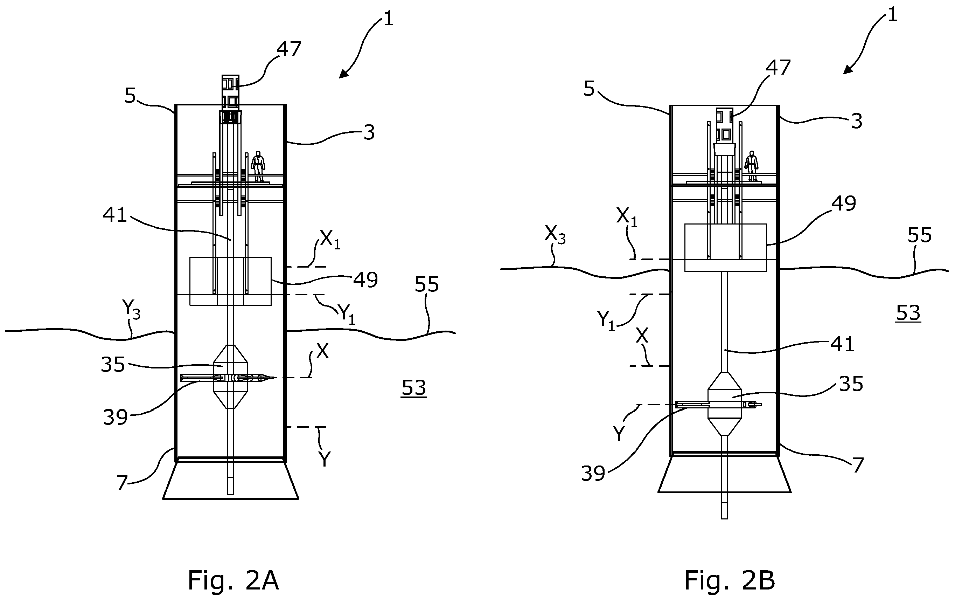

Fig. 2A shows a side view of the system 1 in accordance with the present description, where the reference numbers shown in Fig. 1 apply to this view as well. In Fig. 2A, the tubular part 3 has been submerged into a body of water 53, where the body of water has a water surface 55, where the water surface level is at a level Y₃ in the embodiment shown in Fig. 2A, where the water surface level may e.g. be seen as being in a wave trough, where the water level is low relative to that of the tubular part 3. In this position, the buoyancy body 49 has moved in a direction towards the second end 7, where the water level 57 inside the tubular part 3 is at a level Y₁ which may correspond to the minimum water level inside the tubular part 3. However, the rotor 35 has been moved in a direction towards the first end 5 towards a height X inside the tubular part 3 via the movement of the buoyancy body 49 in the opposite direction.

Fig. 2B shows a side view of the system 1 seen in Fig. 2B, where the water surface 55 of the body of water has been raised to a level X₃ where the body of water may be in a wave crest, and where the body of water rises relative to the position of the water in a wave trough seen in Fig. 2A. In this situation, the water level 57 inside the tubular part 3 has been raised to a level X₁, where the buoyancy of the buoyancy body 49 has caused the buoyancy body 49 to move in a direction towards the first end 5. The movement of the buoyancy body 49 has caused a reciprocal movement of the rotor 35 in the opposite direction, where the rotor has moved to a second position Y inside the tubular part 3. Thus, during the movement of the buoyancy body 49 in a direction towards the first end, the water inside the tubular part 3 has flowed in the corresponding direction towards the first end, causing a flow of water past the rotor 35, thus causing the rotor blades 39 to be forced in a rotational movement. Furthermore, during the flow of water in the first direction towards the first end 5, the rotor has moved axially in the opposite direction towards the second end 7, causing an increase in the resulting speed of the flow of water past the rotor blades 39, thereby increasing the mechanical force applied by the flow of water to the rotor blades 39 and increasing the rotational force that may be transferred via the driveshaft to the power generation device 47.

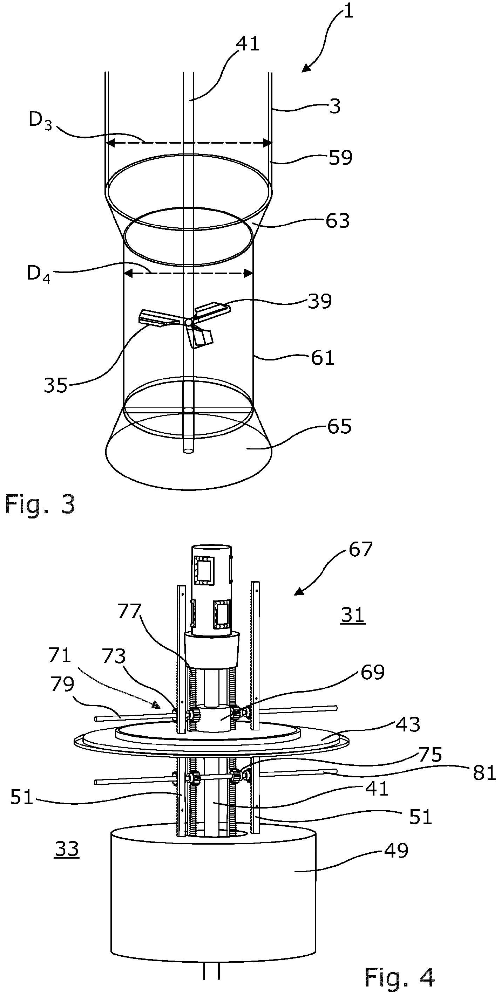

Fig. 3 shows an alternative embodiment of the tubular part 3, where the tubular part has a first part 59 having a third diameter D3 and a second part 61 having a fourth diameter D4, where the fourth diameter D4 is smaller than the third diameter D3. The second part 61 is the axial region of the tubular part 3 that is capable of holding the rotor 35 and the rotor blades 39. Thus, the reduction in diameter causes a constriction R2 inside the tubular part 3 between the inner surface 11 of the tubular part and the driveshaft 41. This constriction R2 causes an increase in the velocity of the flow of water past the rotor body 37, thereby increasing the force that is thrusted on the rotor blades 39. The tubular part 3 may comprise a first conical tubular part 63 and a second conical tubular part 65 that ensure that the transition from the diameter D3 to the diameter D4 of the tubular part on both sides of the second part 61 is incremental in an axial direction.

Fig. 4 shows a power transmission assembly 67 providing a power transmission between the buoyancy body 49 and the driveshaft 41. The power transmission assembly 67 may be at least partly positioned in the dry part 31 of the system 1, where a platform 43 may, e.g., be configured to separate the dry part 31 from the wet part 33. The platform 43 may comprise a base part 69, where the base part 69 is provided with a gearing part 71 comprising a plurality of first gears 73 that are rotationally connected to a plurality of second gears 75 positioned on a radially opposite side of the base part 69. The buoyancy body 49 may be provided with a connecting part 51 in the form of two rods 77 that extend in an axial direction from the buoyancy body 49 and towards the gearing part 71. The driveshaft 41 may extend through the base part 69, allowing the driveshaft to be moved in an axial direction (parallel to the longitudinal axis A shown in Fig. 1). The driveshaft may be connected to the power generation device 47, and where the power generation device may be connected to the gearing part 71 via a second connecting part in the form of two rods 77. Thus, the driveshaft 41, the power generation device 47 and the second connecting parts 73 may be axially moved in unison in response to the movement of the buoyancy body 49.

The power transmission assembly 67 seen in Fig. 1 and Fig. 4 may be replaced by another power transmission assembly, provided that the power transmission assembly from the buoyancy body may be transferred to the rotor in an opposite direction to the flow of the water inside the tubular part. The power transmission may be hydraulic, wires and pulleys and other types of transmission assemblies for mechanical force.

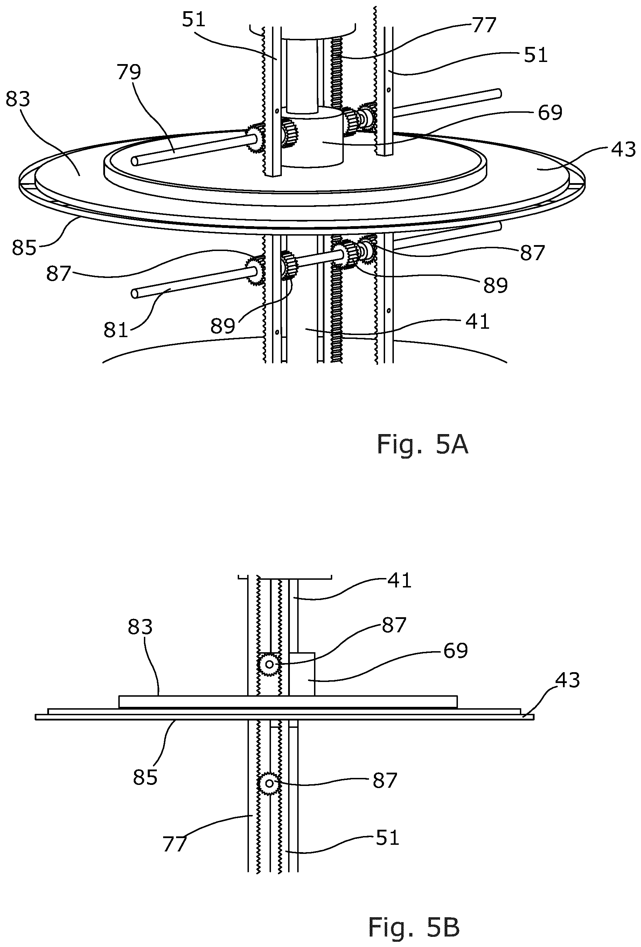

Fig. 5A and 5B shows a closer view of the platform 43, gearing part 71 and the gearing connection between the driveshaft 41 and the buoyancy body 49. The gearing part 71 comprises a first gear shaft 79 and a second gear shaft 81, where the first gear shaft and the second gear shafts are positioned on a first side 83 and a second side 85 of the platform 43, and where the first gear shaft 79 and the second gear shaft 81 are secured to the platform and the base part 69. The first gear shaft 79 and the second gear shaft 81 comprise a first pair of gears 87 and a second pair of gears 89 that are rotationally connected to each other via the first gear shaft 79 and the second gear shaft 81. The first pair of gears 87 are connected to the connecting parts 51 of the buoyancy body 49 on one side of the pair of gears 87, ensuring that axial movement of the buoyancy body 49 results in a rotation in the same direction of the first 79 and the second gear shaft 81. The rods 77 that are connected to the driveshaft 41 via the power generation device 47 are positioned on an opposite side of the first pair of gears 87 and the second pair of gears 89, so that a rotational movement in an upwards direction of the connecting parts 51 will result in a movement in a downwards direction of the rods 77 and thereby the power generation device 47 and the driveshaft 41 and therefore also the rotor 35, as seen in Fig. 1, 2A and 2B. Thus, it is possible to transfer the force applied to the buoyancy body 49 by the water inside the tubular part 3 to the rotor via the gearing part 71.

Here, it may be seen that the two rods 77 that are connected to the power generation device 47 are located on one side of the gears 87, and the connecting parts 51 that are connected to the buoyancy body 49 are positioned on the opposite side of the gears. The power transmission assembly 67 shown in this example may be provided with two rods 77 on opposite radial sides of the longitudinal axis, and where the connecting parts 51 may also be provided with two rods positioned on opposite radial sides of the longitudinal axis A, where the provision of the rods on either side of the longitudinal axis A provides increased stability of the power or force transmission. The rods may be provided with teeth to interact with the gears, to allow force to be transferred from one rod to the rod positioned on the opposite side of the gear via the rotational force of the gear.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the scope of the claimed invention. The specification and drawings are, accordingly, to be regarded in an illustrative rather than restrictive sense.

### List of references

- 1: Wave energy power generation system
- 3: Tubular part
- 5: First end
- 7: Second end
- 9: Side wall
- 11: Inner surface
- 13: Outer surface
- 15: Inner volume
- 17: Opening
- 19: Grid-formed structure
- 21: Structural elements
- 23: Openings
- 25: Conical wall
- 27: First end of conical wall
- 29: Second end of conical wall
- 31: Dry Part
- 33: Wet part
- 35: Rotor
- 37: Rotor body
- 38: Outer surface of rotor body
- 39: Rotor blades
- 40: First conical part
- 41: Driveshaft
- 42: Second conical part
- 43: Platform
- 45: First end of driveshaft
- 47: Power generation device
- 49: Buoyancy body
- 51: Connecting part
- 53: Body of water
- 55: Water surface
- 57: Water level inside tubular part
- 59: First part of tubular part
- 61: Second part of tubular part
- 63: First conical tubular part
- 65: Second conical tubular part
- 67: Power transmission assembly
- 69: Base part
- 71: Gearing part
- 73: First gears
- 75: Second gears
- 77: Rods
- 79: First gear shaft
- 81: Second gear shaft
- 83: First side of platform
- 85: Second side of platform
- 87: First pair of gears
- 89: Second pair of gears
- A: Longitudinal axis
- D1: First diameter
- D2: Second diameter
- D3: Third diameter
- D4: Fourth diameter
- R1: Constriction
- Y: Second position of rotor
- Y1: First water level inside tubular part
- Y3: First water level outside the tubular part
- X: First position of rotor
- X1: Second water level inside tubular part
- X3: Second water level outside the tubular part

## Claims

1. A wave energy power generation system (1) configured to convert wave energy from a body of water (53) into electricity, the wave energy power generation system (1) comprising:
- a tubular part (3) extending axially from a first end (5) to an open second end (7), where the second end (7) of the tubular part (3) is configured to be submerged into the body of water (53), and where the tubular part (3) is secured in a fixed position relative to the wave movement of the body of water (53), and where wave movements in the body of water (53) result in an axial flow of water inside the tubular part (3) in a first direction towards the first end (5) when the surface level (55) of the body of water (53) increases around the tubular part (3) and in a second direction towards the second end (7) when the surface level (55) of the body of water (53) decreases around the tubular part (3),
- a power generation device (47), and
- a rotor (35) positioned at a first axial position (X) inside the tubular part (3), where the rotor (35) is rotationally connected along a rotational axis to the power generation device (47) where the rotor (35) is configured to transform the axial movement of water inside the tubular part (3) into rotational movement of the rotor (35), where the first axial position (X) is below the minimum level of water inside the tubular part (3),
**characterized in that** the rotor (35) is configured to be manoeuvred in the first direction when the axial flow of a water inside the tubular part (3) is flowing in the second direction, and/or the rotor (35) is configured to be manoeuvred in the second direction when the axial flow of water inside the tubular part (3) is flowing in the first direction.

2. A wave energy power generation system (1) in accordance with claim 1, wherein the rotor (35) is capable of transforming a bi-directional axial flow into rotational movement in one direction.

3. A wave energy power generation system (1) in accordance with claim 1 or 2, wherein the rotor (35) may comprise an impeller.

4. A wave energy power generation system (1) in accordance with any one of the preceding claims, wherein the wave energy power generation system (1) may comprise a driveshaft (41) where a first part is rotationally connected with the power generation device (47) and an opposing part is rotationally connected with the rotor (35).

5. A wave energy power generation system (1) in accordance with any one of the preceding claims, wherein the rotor (35) may comprise a rotor body (37) having a first cross-sectional diameter (D2) in a radial direction, providing a constriction inside the tubular body (3) in the axial area where the rotor (35) is positioned.

6. A wave energy power generation system (1) in accordance with any one of the preceding claims, wherein the tubular part (3) has a first cross-sectional diameter (D3) in the radial direction in a first area, and wherein the tubular part (3) has a second cross-sectional diameter (D4) in the radial direction in a second area, where the second cross-sectional diameter (D4) is smaller than the first cross-sectional diameter (D3), and where the rotor (35) is positioned in the second area.

7. A wave energy power generation system (1) in accordance with any one of the preceding claims, wherein the wave energy power generation system (1) may further comprise a buoyancy body (49) configured to be positioned at the surface level of the body of water (53) inside and/or outside the tubular part (3), where the axial movement of the buoyancy body (49) is transferred to the rotor (35) to manoeuvre the rotor (35) in the first direction or the second direction.

8. A wave energy power generation system (1) in accordance with claim 7, wherein a movement of the buoyancy body (49) in a first direction results in the movement of the rotor (35) in a opposite second direction, or a movement of the buoyancy body (49) in a second direction results in the movement of the rotor (35) in an opposite first direction.

9. A wave energy power generation system (1) in accordance with claim 7, wherein the buoyancy body (49) is connected with the rotor (35) via a first gear (73), where an axial movement of the buoyancy body (49) is transferred as an axial movement of the rotor (35) via the first gear (73).

10. A wave energy power generation system (1) in accordance with any one of the preceding claims, wherein the tubular part (3) is configured to be positioned in a vertical position relative to the body of water (53).

11. A wave energy power generation system (1) in accordance with any one of the preceding claims, wherein the power generation device (47) is an electric generator that converts the rotational movement of the rotor (35) into electrical energy.

12. A wave energy power generation system (1) in accordance with any one of the preceding claims, wherein the rotor (35) is configured to be manoeuvred from its first axial position inside the tubular part (3) to a second axial position inside the tubular part (3), where the second axial position is below the minimum level of water inside the tubular part (3).

13. A wave energy power generation system (1) in accordance with any one of the preceding claims, wherein during use the rotor (35) is submerged in a body of water (53) inside the tubular part (3) in its first axial position, second axial position and/or any axial position.

## Patentansprüche

1. Wellenenergie-Stromerzeugungssystem (1), das dazu eingerichtet ist, Wellenenergie aus einem Wasserkörper (53) in Elektrizität umzuwandeln, wobei das Wellenenergie-Stromerzeugungssystem (1) Folgendes aufweist:
- ein rohrförmiges Teil (3), das sich axial von einem ersten Ende (5) zu einem offenen zweiten Ende (7) erstreckt, wobei das zweite Ende (7) des rohrförmigen Teils (3) dazu eingerichtet ist, in den Wasserkörper (53) eingetaucht zu werden, und wobei das rohrförmige Teil (3) in einer festen Position relativ zur Wellenbewegung des Wasserkörpers (53) gehalten ist, und wobei Wellenbewegungen im Wasserkörper (53) zu einer axialen Strömung von Wasser innerhalb des rohrförmigen Teils (3) in einer ersten Richtung zum ersten Ende (5) führen, wenn der Spiegel (55) des Wasserkörpers (53) um das rohrförmige Teil (3) ansteigt, und in einer zweiten Richtung zum zweiten Ende (7), wenn der Spiegel (55) des Wasserkörpers (53) um das rohrförmige Teil (3) absinkt,
- eine Stromerzeugungsvorrichtung (47), und
- einen Rotor (35), der sich an einer ersten axialen Position (X) innerhalb des rohrförmigen Teils (3) befindet, wobei der Rotor (35) entlang einer Rotationsachse drehbar mit der Stromerzeugungsvorrichtung (47) verbunden ist, wobei der Rotor (35) dazu eingerichtet ist, die axiale Bewegung von Wasser innerhalb des rohrförmigen Teils (3) in eine Rotationsbewegung des Rotors (35) umzuwandeln, wobei sich die erste axiale Position (X) unterhalb des minimalen Wasserspiegels innerhalb des rohrförmigen Teils (3) befindet,
**dadurch gekennzeichnet, dass** der Rotor (35) dazu eingerichtet ist, in der ersten Richtung bewegt zu werden, wenn der axiale Wasserstrom innerhalb des rohrförmigen Teils (3) in der zweiten Richtung fließt, und/oder dass der Rotor (35) dazu eingerichtet ist, in der zweiten Richtung bewegt zu werden, wenn der axiale Wasserstrom innerhalb des rohrförmigen Teils (3) in der ersten Richtung fließt.

2. Wellenenergie-Stromerzeugungssystem (1) nach Anspruch 1, wobei der Rotor (35) dazu fähig ist, eine bidirektionale axiale Strömung in eine Rotationsbewegung in einer Richtung umzuwandeln.

3. Wellenenergie-Stromerzeugungssystem (1) nach Anspruch 1 oder 2, wobei der Rotor (35) ein Laufrad aufweisen kann.

4. Wellenenergie-Stromerzeugungssystem (1) nach einem der vorhergehenden Ansprüche, wobei das Wellenenergie-Stromerzeugungssystem (1) eine Antriebswelle (41) aufweisen kann, wobei ein erster Teil drehbar mit der Stromerzeugungsvorrichtung (47) verbunden ist und ein gegenüberliegender Teil drehbar mit dem Rotor (35) verbunden ist.

5. Wellenenergie-Stromerzeugungssystem (1) nach einem der vorhergehenden Ansprüche, wobei der Rotor (35) einen Rotorkörper (37) aufweisen kann, der in radialer Richtung einen ersten Querschnittsdurchmesser (D2) besitzt, wodurch in dem axialen Bereich, in dem sich der Rotor (35) befindet, eine Verengung innerhalb des rohrförmigen Körpers (3) bereitgestellt wird.

6. Wellenenergie-Stromerzeugungssystem (1) nach einem der vorhergehenden Ansprüche, wobei das rohrförmige Teil (3) in einem ersten Bereich einen ersten Querschnittsdurchmesser (D3) in radialer Richtung und in einem zweiten Bereich einen zweiten Querschnittsdurchmesser (D4) in radialer Richtung aufweist, wobei der zweite Querschnittsdurchmesser (D4) kleiner ist als der erste Querschnittsdurchmesser (D3), und wobei sich der Rotor (35) in dem zweiten Bereich befindet.

7. Wellenenergie-Stromerzeugungssystem (1) nach einem der vorhergehenden Ansprüche, wobei das Wellenenergie-Stromerzeugungssystem (1) ferner einen Auftriebskörper (49) aufweisen kann, der dazu eingerichtet ist, sich auf dem Wasserspiegel des Wasserkörpers (53) innerhalb und/oder außerhalb des rohrförmigen Teils (3) zu befinden, wobei die axiale Bewegung des Auftriebskörpers (49) auf den Rotor (35) übertragen wird, um den Rotor (35) in der ersten oder in der zweiten Richtung zu bewegen.

8. Wellenenergie-Stromerzeugungssystem (1) nach Anspruch 7, wobei eine Bewegung des Auftriebskörpers (49) in einer ersten Richtung eine Bewegung des Rotors (35) in einer entgegengesetzten zweiten Richtung bewirkt oder eine Bewegung des Auftriebskörpers (49) in einer zweiten Richtung eine Bewegung des Rotors (35) in einer entgegengesetzten ersten Richtung bewirkt.

9. Wellenenergie-Stromerzeugungssystem (1) nach Anspruch 7, wobei der Auftriebskörper (49) über ein erstes Zahnrad (73) mit dem Rotor (35) verbunden ist, wobei eine axiale Bewegung des Auftriebskörpers (49) über das erste Zahnrad (73) als axiale Bewegung des Rotors (35) übertragen wird.

10. Wellenenergie-Stromerzeugungssystem (1) nach einem der vorhergehenden Ansprüche, wobei das rohrförmige Teil (3) dazu eingerichtet ist, in einer vertikalen Position relativ zu dem Wasserkörper (53) angeordnet zu werden.

11. Wellenenergie-Stromerzeugungssystem (1) nach einem der vorhergehenden Ansprüche, wobei die Stromerzeugungsvorrichtung (47) ein elektrischer Generator ist, der die Rotationsbewegung des Rotors (35) in elektrische Energie umwandelt.

12. Wellenenergie-Stromerzeugungssystem (1) nach einem der vorhergehenden Ansprüche, wobei der Rotor (35) dazu eingerichtet ist, von seiner ersten axialen Position innerhalb des rohrförmigen Teils (3) in eine zweite axiale Position innerhalb des rohrförmigen Teils (3) bewegt zu werden, wobei sich die zweite axiale Position unterhalb des minimalen Wasserspiegels innerhalb des rohrförmigen Teils (3) befindet.

13. Wellenenergie-Stromerzeugungssystem (1) nach einem der vorhergehenden Ansprüche, wobei der Rotor (35) während des Betriebs in einem Wasserkörper (53) innerhalb des rohrförmigen Teils (3) in seiner ersten axialen Position, zweiten axialen Position und/oder in jeder axialen Position eingetaucht ist.

## Revendications

1. Système de production d'énergie houlomotrice (1) configuré pour convertir en électricité l'énergie houlomotrice provenant d'une étendue d'eau (53), le système de production d'énergie houlomotrice (1) comprenant :
- une partie tubulaire (3) s'étendant axialement d'une première extrémité (5) à une deuxième extrémité ouverte (7), où la deuxième extrémité (7) de la partie tubulaire (3) est configurée pour être submergée dans l'étendue d'eau (53), et où la partie tubulaire (3) est fixée dans une position fixe par rapport au mouvement des vagues de l'étendue d'eau (53), et où les mouvements des vagues dans l'étendue d'eau (53) entraînent un écoulement axial de l'eau à l'intérieur de la partie tubulaire (3) dans une première direction vers la première extrémité (5) lorsque le niveau de surface (55) de l'étendue d'eau (53) augmente autour de la partie tubulaire (3) et dans une deuxième direction vers la deuxième extrémité (7) lorsque le niveau de surface (55) de l'étendue d'eau (53) diminue autour de la partie tubulaire (3),
- un dispositif de production d'énergie (47), et
- un rotor (35) positionné à une première position axiale (X) à l'intérieur de la partie tubulaire (3), où le rotor (35) est relié en rotation le long d'un axe de rotation au dispositif de production d'énergie (47), où le rotor (35) est configuré pour transformer le mouvement axial de l'eau à l'intérieur de la partie tubulaire (3) en mouvement de rotation du rotor (35), où la première position axiale (X) est inférieure au niveau minimum de l'eau à l'intérieur de la partie tubulaire (3),
**caractérisé en ce que** le rotor (35) est configuré pour être manœuvré dans la première direction lorsque l'écoulement axial de l'eau à l'intérieur de la partie tubulaire (3) s'écoule dans la deuxième direction, et/ou le rotor (35) est configuré pour être manœuvré dans la deuxième direction lorsque l'écoulement axial de l'eau à l'intérieur de la partie tubulaire (3) s'écoule dans la première direction.

2. Système de production d'énergie houlomotrice (1) selon la revendication 1, dans lequel le rotor (35) est capable de transformer un écoulement axial bidirectionnel en un mouvement de rotation dans une direction.

3. Système de production d'énergie houlomotrice (1) selon la revendication 1 ou 2, dans lequel le rotor (35) peut comprendre une roue.

4. Système de production d'énergie houlomotrice (1) selon l'une quelconque des revendications précédentes, dans lequel le système de production d'énergie houlomotrice (1) peut comprendre un arbre de transmission (41) dont une première partie est reliée en rotation au dispositif de production d'énergie (47) et une partie opposée est reliée en rotation au rotor (35).

5. Système de production d'énergie houlomotrice (1) selon l'une quelconque des revendications précédentes, dans lequel le rotor (35) peut comprendre un corps de rotor (37) ayant un premier diamètre de section transversale (D2) dans une direction radiale, fournissant une constriction à l'intérieur du corps tubulaire (3) dans la zone axiale où le rotor (35) est positionné.

6. Système de production d'énergie houlomotrice (1) selon l'une quelconque des revendications précédentes, dans lequel la partie tubulaire (3) présente un premier diamètre de section transversale (D3) dans la direction radiale dans une première zone, et dans lequel la partie tubulaire (3) présente un deuxième diamètre de section transversale (D4) dans la direction radiale dans une deuxième zone, où le deuxième diamètre de section transversale (D4) est plus petit que le premier diamètre de section transversale (D3), et où le rotor (35) est positionné dans la deuxième zone.

7. Système de production d'énergie houlomotrice (1) selon l'une quelconque des revendications précédentes, dans lequel le système de production d'énergie houlomotrice (1) peut comprendre en outre un corps flottant (49) configuré pour être positionné au niveau de la surface de l'étendue d'eau (53) à l'intérieur et/ou à l'extérieur de la partie tubulaire (3), où le mouvement axial du corps flottant (49) est transféré au rotor (35) pour manoeuvrer le rotor (35) dans la première direction ou dans la deuxième direction.

8. Système de production d'énergie houlomotrice (1) selon la revendication 7, dans lequel un mouvement du corps flottant (49) dans une première direction entraîne le mouvement du rotor (35) dans une deuxième direction opposée, ou un mouvement du corps flottant (49) dans une deuxième direction entraîne le mouvement du rotor (35) dans une première direction opposée.

9. Système de production d'énergie houlomotrice (1) selon la revendication 7, dans lequel le corps flottant (49) est relié au rotor (35) par un premier engrenage (73), où un mouvement axial du corps flottant (49) est transféré en tant qu'un mouvement axial du rotor (35) par le premier engrenage (73).

10. Système de production d'énergie houlomotrice (1) selon l'une quelconque des revendications précédentes, dans lequel la partie tubulaire (3) est configurée pour être placée dans une position verticale par rapport à l'étendue d'eau (53).

11. Système de production d'énergie houlomotrice (1) selon l'une quelconque des revendications précédentes, dans lequel le dispositif de production d'énergie (47) est un générateur électrique qui convertit le mouvement de rotation du rotor (35) en énergie électrique.

12. Système de production d'énergie houlomotrice (1) selon l'une quelconque des revendications précédentes, dans lequel le rotor (35) est configuré pour être manœuvré de sa première position axiale à l'intérieur de la partie tubulaire (3) à une deuxième position axiale à l'intérieur de la partie tubulaire (3), où la deuxième position axiale est en dessous du niveau minimum de l'eau à l'intérieur de la partie tubulaire (3).

13. Système de production d'énergie houlomotrice (1) selon l'une quelconque des revendications précédentes, dans lequel, pendant l'utilisation, le rotor (35) est immergé dans une étendue d'eau (53) à l'intérieur de la partie tubulaire (3) dans sa première position axiale, sa deuxième position axiale et/ou n'importe quelle position axiale.
